# EUROPÄISCHE PATENTSCHRIFT

(11) **EP 3 357 045 B1**
(45) Veröffentlichungstag und Bekanntmachung des Hinweises auf die Patenterteilung: **06.01.2021**
(21) Anmeldenummer: 16775150.2
(22) Anmeldetag: 26.09.2016
(51) Int. Cl.: G07F 13/02, G07F 15/00, B67D 7/08, B60K 15/00, B60K 35/00

(54) **VERFAHREN ZUR DIREKTEN ODER INDIREKTEN KOMMUNIKATION ZWISCHEN EINEM KRAFTFAHRZEUG UND WENIGSTENS EINER FAHRZEUGEXTERNEN ENERGIEVERSORGUNGSEINHEIT FÜR DAS KRAFTFAHRZEUG IN ZUSAMMENHANG MIT EINEM ENERGIEVERSORGUNGSVORGANG**
METHOD FOR DIRECT OR INDIRECT COMMUNICATION BETWEEN A MOTOR VEHICLE AND AT LEAST ONE VEHICLE-EXTERNAL ENERGY SUPPLY UNIT FOR THE VEHICLE, IN CONJUNCTION WITH AN ENERGY SUPPLY PROCESS
PROCÉDÉ DE COMMUNICATION DIRECTE OU INDIRECTE ENTRE UN VÉHICULE AUTOMOBILE ET AU MOINS UNE UNITÉ D'ALIMENTATION EN ÉNERGIE EXTERNE AU VÉHICULE DESTINÉE AU VÉHICULE AUTOMOBILE EN RELATION AVEC UNE OPÉRATION D'ALIMENTATION EN ÉNERGIE

(30) Priorität: 28.09.2015 DE 102015218640
(43) Veröffentlichungstag der Anmeldung: 08.08.2018
(73) Patentinhaber: Volkswagen Aktiengesellschaft, 38440 Wolfsburg (DE)
(72) Erfinder: BREUER, Thorsten, 29229 Celle (DE); HUFER, Laurens, 38442 Wolfsburg (DE)
(86) Internationale Anmeldenummer: PCT/EP2016/072842
(87) Internationale Veröffentlichungsnummer: WO 2017/055212

(56) Entgegenhaltungen:
- EP-A1- 2 759 439
- DE-A1- 4 309 605
- DE-A1-102012 004 874
- DE-A1-102013 001 887
- DE-A1-102014 203 055
- DE-T2- 69 806 038
- US-A1- 2012 303 531
- US-A1- 2013 144 519
- US-B1- 6 882 900

## Beschreibung

Ein Verfahren mit den Merkmalen vom Oberbegriff des Patentanspruchs 1 ist aus der US 6 882 900 B1 bekannt. Konkret ist eine Tankstelleneinheit beschrieben, bei der über funkbasierte Kommunikationsschnittstellen (Transponder) von Tanksäulen eine Kommunikation mit Kommunikationsschnittstellen (Transponder) tankender Kraftfahrzeuge stattfindet. Bei einem Tankvorgang können von den fahrzeugeigenen Kommunikationsschnittstellen Daten an die Kommunikationsschnittstellen der Tanksäulen gesendet werden. Aufgrund des Datenaustauschs erfolgt eine Kontrolle von Transaktionen, wie beispielsweise einen Tankvorgang, dessen Bezahlung, Rabattierung, usw. Unter anderem wird erwähnt, dass über den Datenaustausch eine nachzutankende Kraftstoffmenge, die Art des Kraftstoffs und der damit verbundene Preis ermittelt und über ein Display angezeigt wird. Dem Tankkunden wird durch eine Eingabeaufforderung an einem Display die Möglichkeit gegeben, den Tankvorgang zu beginnen oder abzubrechen.

In der DE 43 09 605 A1 wird ein Verfahren zur Anzeige eines Betriebsflüssigkeitsvorrats von Kraftfahrzeugen beschrieben. Konkret wird durch einen Niveaugeber ein Rohmesswert geliefert, welcher durch eine nachgeschaltete Dämpfungsvorrichtung um kurzzeitige Schwankungen bereinigt wird. Bei Stillstand des Kraftfahrzeugs wird der zuletzt angezeigte Messwert gespeichert und weiter angezeigt. Änderungen des Rohmesswertes werden nur dann berücksichtigt und angezeigt, wenn sie einen vorgegebenen Toleranzbereich (z.B. beim Nachtanken) übersteigen.

Die US 2012/303531 A1 offenbart ein Verfahren, um eine Tanksäule für ein Kraftfahrzeug zu aktivieren, sobald über einen Datenaustausch zwischen einem tankstellenseitigen Rechner und dem Kraftfahrzeug eine Berechtigung zum Tanken und eine ausreichende Nähe zwischen dem Kraftfahrzeug und der Tanksäule bestätigt wurde.

Der DE 698 06 038 T2 ist eine Zapfanlage zu entnehmen, welche einen Empfänger zum Empfangen von Fahrzeugbetankungsparametern aufweist. Es wird die Optimierung eines Betankungsvorgangs auf Grundlage von Parametern ermöglicht, die von einem zu betankenden Fahrzeug an die Zapfanlage bzw. an den Empfänger geliefert werden. Insbesondere wird bei dem Verfahren die Durchflussrate des Kraftstoffs beim Tanken überwacht und optimiert.

In der DE 10 2012 004874 A1 wird ein Verfahren zur Anzeige von Informationen betreffend einen Ladevorgang und/oder einen Ladezustand eines Elektrofahrzeugs beschrieben. Konkret erfolgt die Anzeige der Informationen durch fahrzeugseitige Projektion der Informationen auf einen fahrzeugexternen Ladestecker.

Der EP 2 759 439 A1 ist eine Benutzerschnittstelle in einem Kraftfahrzeug mit einem Display zu entnehmen, in dem die graphische Anzeige eines aktuellen Energievorrats und die graphische Anzeige einer verbleibenden Reichweite miteinander kombiniert werden.
In der DE 10 2006 044 780 A1 werdenein Verfahren und eine Vorrichtung zum Überwachen des Einfüllens von Kraftstoff in einen Tank eines Kraftfahrzeugs beschrieben. Der Tank des Kraftfahrzeugs ist dabei mit einer Identifikationseinheit versehen, mit der ein für das Kraftfahrzeug zugelassener Kraftstoff identifizierbar ist. Einer Zapfsäule ist eine Erkennungseinheit zugeordnet, wodurch die Identifikationseinheit des Kraftfahrzeugs und damit ein zugelassener Kraftstoff auslesbar sind. In der Zapfsäule ist eine Datenverarbeitungseinheit integriert. Die Datenverarbeitungseinheit dient zum Vergleich der durch die Zapfsäule abgebbaren Kraftstoffsorten mit dem zulässigen Kraftstoff des Kraftfahrzeugs. Wenn eine der in der Zapfsäule zur Verfügung stehenden Kraftstoffsorten zulässig ist, wird ein Betankungsvorgang zugelassen. Sollte die abgebbare Flüssigkeit nicht für das Kraftfahrzeug zugelassen sein, so wird beispielsweise ein akustisches oder optisches Signal abgegeben und ein Betankungsvorgang verhindert. Dies kann beispielswiese dadurch geschehen, dass ein Zapfhahn oder eine Tanksäule abgeschaltet wird.

In der EP 1 184 241 A1 ist ein Verfahren zur automatischen Kontrolle von Betankungsvorgängen von Fahrzeugen einer Fuhrparkflotte offenbart. Die Bezahlung einer entnommenen Kraftstoffmenge erfolgt bargeldlos unter Verwendung einer dem Fahrzeug zugeordneten Kreditkarte bei gleichzeitiger Feststellung des Ortes der Verwendung der Kreditkarte. Um ausschließen zu können, dass andere Fahrzeuge als solche der Fuhrparkflotte betankt und dabei zur Bezahlung den Fuhrparkfahrzeugen zugeordnete Kreditkarten verwendet werden, wird zusätzlich die geographische Position des Fahrzeugs zum Betankungszeitpunkt ermittelt. Diese Position wird mittels Datenfernübertragung einem Zentralrechner zur Durchführung eines Abgleichs der geographischen Position des betankten Fahrzeugs mit dem Ort der Verwendung der Kreditkarte übermittelt.
Hierzu erfolgt ein Datenaustausch zwischen dem Fahrzeug und einem Zentralrechner einerseits und zwischen der Tankstelleneinheit/Kreditkarteneinheit und dem Zentralrechner andererseits. Der Datenaustausch wird über gängige Netzwerke, beispielsweise ISDN, Datex-P, Satellit, Internet oder dergleichen bewerkstelligt.

Die US 2013/144519 A1 offenbart ein Tankverfahren bzw. Energieübertragungsverfahren in dem Daten zwischen Fahrzeug und Tankanlage bzw. Energieversorgungseinheit ausgetauscht werden. Das Fahrzeug teilt der Tankanlage bzw. Energieversorgungseinheit die gewünschte Kraftstoff- bzw. Energiemenge mit. Die Tankanlage bzw. Energieversorgungseinheit teilt dem Fahrzeug die schon übertragene Kraftstoffmenge bzw. Energiemenge mit.

Schließlich wird in der DE 10 2014 203 055 A1 eine Vorrichtung zum Bestimmen der von einer Zapfsäule in einen Kraftstoffbehälter gepumpten Kraftstoffmenge beschrieben. Dabei misst ein Durchflusssensor die in den Kraftstoffbehälter gepumpte Kraftstoffmenge und legt diese Daten in einen Datenspeicher ab. Es werden auch Daten über die zapfsäulenseitige Anzeige der abgegebenen Kraftstoffmenge abgespeichert. Somit kann auf eine Anzeigegenauigkeit einer Zapfsäule bzw. einer Tankstelle geschlossen werden. Über eine Kommunikationseinrichtung können die gespeicherten Daten von einem Server abgerufen und gespeichert werden. Die auf dem Server gespeicherten Daten stehen für andere Nutzer zum Abrufen über mobile Endgeräte bereit.

Der vorliegenden Erfindung liegt die Aufgabe zu Grunde, ein Verfahren vorzuschlagen, mit dem auf einfache Weise festgestellt werden kann, dass ein Energieversorgungsvorgang stattfindet und dieser auch in seiner Quantität besser erfasst und angezeigt werden kann. Vorgenannte Aufgabe wird mit den Merkmalen von Patentanspruch 1 gelöst. Vorteilhafte Weiterbildungen beziehungsweise Ausbildungen der Erfindung sind den jeweiligen Unteransprüchen zu entnehmen.

Die Erfindung geht aus von einem Verfahren zur direkten oder indirekten Kommunikation zwischen einem Kraftfahrzeug und wenigstens einer fahrzeugexternen Energieversorgungseinheit für das Kraftfahrzeug in Zusammenhang mit einem Energieversorgungsvorgang.

Erfindungsgemäß wird vorgeschlagen, dass vor oder mit Beginn einer Energieabgabe an wenigstens einen Energiespeicher des Kraftfahrzeugs von der Energieversorgungseinheit an wenigstens eine Komponente des Kraftfahrzeugs ein Signal zur Bestätigung der erfolgenden Energieabgabe übermittelt wird
Bei einer direkten Kommunikation kommunizieren zwei Kommunikationspartner unmittelbar miteinander, während bei einer indirekten Kommunikation wenigstens ein weiterer Kommunikationspartner zwischengeschaltet ist.

Da heutzutage die Kraftfahrzeuge mit Verbrennungsmotoren und/oder zunehmend mit elektrischen Antrieben ausgestattet sind, kann unter dem Begriff Energieversorgungseinheit sowohl eine konventionelle Zapfsäule als auch eine Ladestation zum Laden von elektrischer Energie verstanden werden. Selbstverständlich ist die Aufzählung nicht abschließend und auch Energieversorgungseinheiten für andere Energieträger (beispielsweise Gas, Wasserstoff) sind denkbar.

Als Energieversorgungsvorgang ist ein solcher Vorgang zu bezeichnen, bei dem das Kraftfahrzeug mit neuer Energie versorgt beziehungsweise dem Kraftfahrzeug neue Energie zugeführt wird.

Durch das besagte Signal zur Bestätigung der erfolgenden Energieabgabe kann auf einfache Weise die Erkennung eines Energieversorgungsvorgangs bewerkstelligt werden. Das Signal wird als einfaches Statussignal (Zustandsbit: ja/nein) zur Verfügung gestellt. Dies reduziert den erforderlichen Steuerungsaufwand.

Aufgrund der Übermittlung eines solchen Signals werden überdies erst die Voraussetzungen dafür geschaffen, dass ein Energieversorgungsvorgang auch in seiner Quantität besser erfasst und entsprechend angezeigt werden kann.

Als Verwirklichung der Erfindung wird zudem vorgeschlagen, dass nach Übermittlung des Signals fahrzeugseitig eine Anzeige der aufgenommenen Energiemenge derart angepasst wird, dass ein ohne Vorliegen des Signals vorhandener Toleranzbereich (sogenannte Nachtankschwelle), innerhalb dessen Schwankungen des Energievorrats im Energiespeicher nicht angezeigt werden, beseitigt oder zumindest verkleinert wird.

Ist das Kraftfahrzeug beispielsweise mit einem Verbrennungsmotor ausgestattet, so erfolgt die Anzeige der aufgenommenen Energiemenge, also des getankten Kraftstoffs, zumeist über eine so genannte Tanknadel.

Um jedoch lediglich durch kurzfristige Neigungen des Kraftfahrzeugs bedingte Schwankungen des gemessenen Füllstands vom Tank nicht unnötig anzeigen zu lassen, ist der oben erwähnte Toleranzbereich vorgesehen. Kurzfristige Neigungen des Kraftfahrzeugs im Stillstand können beispielsweise durch Be- und Entladevorgänge, Ein-/Aussteigen von Personen, Schräglage des Kraftfahrzeugs, etc. verursacht sein

Der Toleranzbereich wird vorzugsweise auf wenige Liter festgelegt. Je größer dieser Toleranzbereich ist, desto mehr muss bei einem Tankvorgang zugetankt werden, bevor ein Nachtankvorgang vom Bordsystem des Kraftfahrzeugs erkannt und auch entsprechend angezeigt wird.

Die auf der einen Seite erwünschte "Ruhigstellung" einer Tankanzeige kann auf der anderen Seite also einen Anzeigefehler bedingen.

Durch die besagte Verwirklichung der Erfindung wird dieser Fehler beseitigt beziehungsweise minimiert.

Bei einer Nutzung von Prepaid-Tankstellen, die heutzutage oftmals anzutreffen sind, kann ein Bediener die Betankung über eine Vorgabe des gewünschten Gesamtpreises durchführen. Hierzu ist jedoch die Kenntnis des Kraftstoffpreises und der betankbaren Menge des Kraftfahrzeugs notwendig. Hierdurch wird ein Tankvorgang unkomfortabel.

Eine Betankung ist jedoch auch über eine Freischaltung durch EC-Karte/Kreditkarte möglich, wobei eine anschließende Betankung bis zum Stoppen durch ein automatisches Abschalten oder durch den Bediener denkbar ist. In manchen Ländern kann die Freischaltung auch durch Hinterlegen von Bargeld beim Kassierer erfolgen.

Eine Weiterbildung der Erfindung schlägt daher vor, dass vor einer Energieabgabe an wenigstens einen Energiespeicher des Kraftfahrzeugs ein Energievorrat im Energiespeicher ermittelt, daraus ein Wert für eine maximal vom Energiespeicher aufnehmbare Energiemenge abgeleitet und dieser Wert der fahrzeugexternen Energieversorgungseinheit zur Verfügung gestellt wird. Dabei entspricht eine tatsächliche Abgabemenge von Energie seitens der Energieversorgungseinheit höchstens der maximal vom Kraftfahrzeug aufnehmbaren Energiemenge.

Bei einem Fahrzeug mit Verbrennungsmotor ist der Energiespeicher im Allgemeinen als Tank ausgebildet. Bei Elektrofahrzeugen oder Hybridfahrzeugen sind als Energiespeicher in der Regel spezielle, unter Hochspannung stehende Traktionsbatterien vorhanden.

Die beschriebene Weiterbildung der Erfindung ermöglicht eine Automatisierung des Energieversorgungsvorgangs, insbesondere bei der Nutzung von Prepaid-Energieversorgungseinheiten. Hiermit einhergehend ist eine deutliche Komfortsteigerung für einen Fahrzeugführer. Dieser muss sich nicht die aufzunehmende Energiemenge (bspw. durch Ablesen einer Tankanzeige) herleiten, um einen "passenden" Energieversorgungsvorgang einleiten zu können.

Vorzugsweise erfolgt die Kommunikation zwischen den besagten Komponenten drahtlos mit bekannten Verfahren, wie z. B. WLAN (Wireless Local Area Network), Internet, WPAN (Wireless Personal Area Network beziehungsweise Bluetooth), NFC (Near Field Communication) oder RFID (Radio Frequency Identification).

Da es mittlerweile eine drahtlose Kommunikation in allen Bereichen gibt, kann diese vorteilhaft genutzt werden. Obendrein tritt bei kontakt- bzw. drahtloser Kommunikation keinerlei Verschleiß oder gar Funkenflug auf, der insbesondere bei Tankstellen eine gewisse Gefahr in sich birgt.

Eine Weiterbildung des Verfahrens schlägt vor, dass vor einer Energieabgabe die maximal vom Energiespeicher aufnehmbare Energiemenge mit einem bestimmten oder zu bestimmenden Geldbetrag abgeglichen wird. Dies kann derart erfolgen, dass der Energieversorgungseinheit eine Information über den Geldbetrag zur Verfügung gestellt wird und aus diesem Geldbetrag eine bezahlbare Abgabemenge abgeleitet wird. Dabei wird die Energieversorgungseinheit derart angesteuert, dass die tatsächliche Abgabemenge kleiner ist als die maximal aufnehmbare Energiemenge, wenn die bezahlbare Abgabemenge kleiner als die maximal aufnehmbare Energiemenge ist.

Dies trägt ebenfalls zu einer Komfortsteigerung bei, da sich ein Kunde bei der Versorgung von Energie für sein Kraftfahrzeug keine Gedanken machen muss, ob sein Geld für einen Energieversorgungsvorgang reicht oder nicht.

Eine andere Ausbildung des Erfindungsgedankens schlägt noch vor, dass vor einer Energieabgabe die maximal vom Energiespeicher aufnehmbare Energiemenge mit einem Energievorrat der Energieversorgungseinheit abgeglichen wird. Dabei wird die Energieversorgungseinheit derart angesteuert, dass die tatsächliche Abgabemenge dem Energievorrat der Energieversorgungseinheit entspricht, wenn der Energievorrat der Energieversorgungseinheit kleiner als die maximal aufnehmbare Energiemenge ist.

Auch diese Ausbildung der Erfindung kann zu einer Komfortsteigerung bei einem automatischen Energieversorgungsvorgang beitragen. Der Kunde erhält somit zumindest die maximal zur Verfügung stehende Menge an Energie. Falls die von der Energieversorgungseinheit abgebbare Energiemenge einen bestimmten oder bestimmbaren Wert unterschreiten sollte, kann eine optische und/oder akustische und/oder haptische (z.B. Vibrieren) Warnmeldung ausgegeben werden. Es ist in diesem Zusammenhang zusätzlich denkbar die tatsächlich abgebbare bzw. abgegebene Energiemenge aus der Energieversorgungseinheit anzuzeigen. Wahlweise kann ggf. zusätzlich auch ein Hinweis ausgegeben werden, dass z.B. nicht vollgetankt oder dass weniger als möglich zugeführt wurde.

Die Erfindung betrifft aber auch eine Vorrichtung zur Durchführung des erfindungsgemäßen Verfahrens.

Eine solche Vorrichtung umfasst ein Kraftfahrzeug und eine fahrzeugexterne Energieversorgungseinheit, wobei sowohl das Kraftfahrzeug als auch die Energieversorgungseinheit jeweils mit wenigstens einer Kommunikationseinrichtung ausgestattet sind, über die ein direkter oder indirekter Datenaustausch zwischen dem Kraftfahrzeug und der Energieversorgungseinheit möglich ist. Ferner weist das Kraftfahrzeug wenigstens eine Anzeigeeinrichtung zur Anzeige eines Energievorrats in einem Energiespeicher auf. Die Anzeigeeinrichtung ist derart ansteuerbar, dass innerhalb eines Toleranzbereiches liegende Schwankungen des Energievorrats im Energiespeicher nicht angezeigt werden. Die Größe des Toleranzbereichs ist ferner in Anhängigkeit der ausgetauschten Daten veränderbar, wobei der Toleranzbereich insbesondere entfernbar oder zumindest verkleinerbar ist.

Hierdurch kann durch den Toleranzbereich bedingten Anzeigefehlern entgegen gewirkt werden.

Die Vorrichtung ist dadurch weiterzubilden, dass eine Abgabemenge von Energie durch die Energieversorgungseinheit an das Kraftfahrzeug in Abhängigkeit der ausgetauschten Daten steuerbar ist. Mit einer auf diese Weise hergerichteten Vorrichtung kann das erfindungsgemäße Verfahren gut ausgeführt und ein komfortabler Energieversorgungsvorgang ermöglicht werden.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein Schaubild einer Vorrichtung zur Durchführung des erfindungsgemäßen Verfahrens,
- Fig. 2: die Detaildarstellung einer auf Grund eines Statussignals ansteuerbaren Anzeigeeinrichtung der erfindungsgemäßen Vorrichtung,
- Fig. 3: ein Verlauf des Energievorrats im Energiespeicher über der Zeit t,
- Fig. 4: eine Detaildarstellung gemäß Ansicht IV aus Fig. 3 zur Erläuterung der Wirkung des Toleranzbereichs,
- Fig. 5: ein Verlauf des Toleranzbereichs in Abhängigkeit eines Statussignals über der Zeit und
- Fig. 6: ein Ablaufdiagramm zur Erläuterung des erfindungsgemäßen Verfahrens.

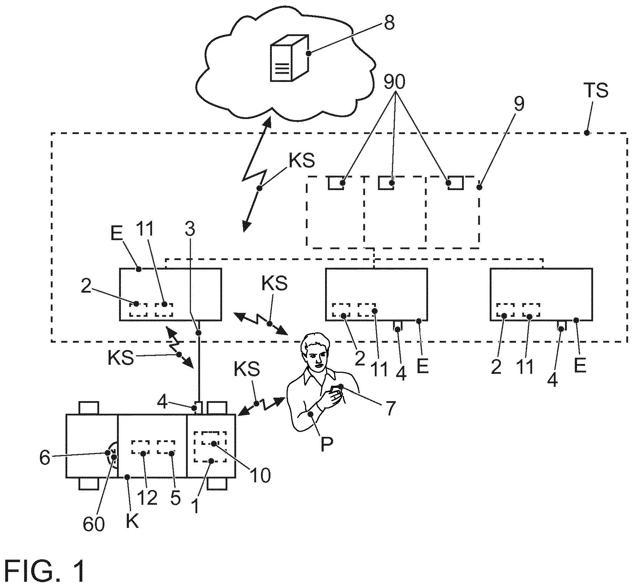

Aus Fig. 1 ist eine Tankstelle TS schemenhaft ersichtlich. Die Tankstelle TS weist mehrere Energieversorgungseinheiten E in Form von Zapfsäulen auf. Die Energieversorgungseinheiten E sind mit einem Energiespeicher 9, in dem unterschiedliche Kraftstoffe gespeichert sind, fluidisch verbunden.

Die Kraftstoffe können über Zapfhähne 4, welche mit Zapfschläuchen 3 verbunden sind, einem Kraftfahrzeug K zugeführt werden.

Jede Energieversorgungseinheit E ist mit einer Kommunikationseinrichtung 2 ausgestattet, über die vorzugsweise mittels eines drahtlosen Kommunikationssystems KS eine Kommunikation mit einer Kommunikationseinrichtung 5 eines zu betankenden Kraftfahrzeugs K, mit einem der Tankstelle TS zugeordneten Zentralrechner 8 und/oder mit einem mobilen Kommunikationsgerät 7 einer Bedienperson P möglich ist.

Eine Kommunikation zwischen jeweils zwei der genannten Komponenten ist jeweils direkt, also unmittelbar untereinander, oder auch indirekt unter Zwischenschaltung wenigstens einer anderen Komponente denkbar.

Abweichend vom Ausführungsbeispiel ist aber auch eine draht- bzw. kabelgebundene Übermittlung von Daten denkbar. Beispielsweise ist denkbar, den Zapfhahn 4 zusammen mit einem Einfüllstutzen des Kraftfahrzeugs K als Signalpfad zu verwenden.

Des Weiteren ist jede Energieversorgungseinheit E mit einer Auswerte- und Steuereinrichtung 11 versehen, über die in Abhängigkeit von mittels des Kommunikationssystems KS ausgetauschten Daten die Steuerung einer Abgabemenge von Kraftstoff mittels des Zapfhahns 4 an das Kraftfahrzeug K möglich ist.

Auch das Kraftfahrzeug K ist mit einer Auswerte- und Steuereinrichtung 12 versehen, über die eine Anzeigeeinrichtung 60 eines Anzeigeinstrumentes 6 in Abhängigkeit von mittels des Kommunikationssystems KS ausgetauschten Daten ansteuerbar ist. Das Anzeigeinstrument 6 kann als Kombiinstrument ausgebildet sein, in dem mehrere Anzeigeeinrichtungen zusammengefasst sind.

Die Kommunikationseinrichtung 2 steht in signaltechnischer Verbindung mit der Auswerte- und Steuereinrichtung 11.

Gleichermaßen steht die Kommunikationseinrichtung 5 in signaltechnischer Verbindung mit der Auswerte- und Steuereinrichtung 12.

Das Kraftfahrzeug K ist mit einem Verbrennungsmotor (nicht dargestellt) ausgestattet. Zur Versorgung des Verbrennungsmotors dient ein Energiespeicher 1 in Form eines Kraftstoffbehälters, durch den chemische Energie in Form von Kraftstoff aufgenommen bzw. aufnehmbar ist.

Über eine Füllstandserfassungseinrichtung 10 kann der Füllstand von Kraftstoff im Energiespeicher 1 ermittelt werden.

Die Füllstandserfassungseinrichtung 10 kann beispielsweise eine Sensorik und/oder eine Schwimmermechanik umfassen.

Gleichermaßen ist der Energiespeicher 9 mit Füllstandserfassungseinrichtungen 90 ausgestattet, mit denen der Füllstand des jeweils vom Kraftfahrzeug K angeforderten Kraftstoffs gemessen und an die Kommunikationseinrichtung 2 einer Energieversorgungseinheit E und/oder den Zentralrechner 8 gesendet wird.

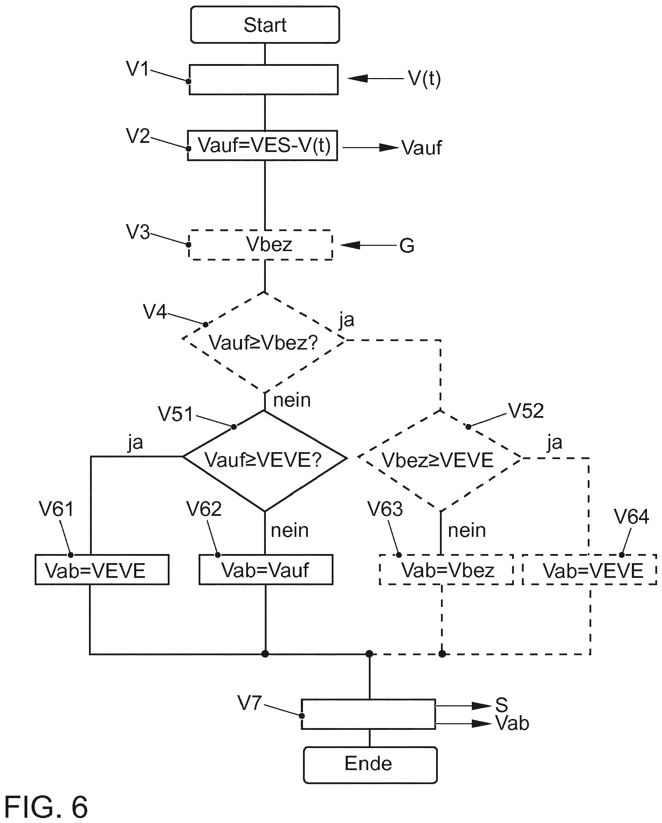

Anhand von Fig. 6 sollen nun zunächst Verfahrensschritte erläutert werden, die in Zusammenhang mit einem Energieversorgungs- bzw. Tankvorgang des Kraftfahrzeugs K stehen.

Die Energieversorgungseinheiten E der Tankstelle TS können als so genannte Prepaid-Tanksäulen ausgebildet sein.

Sobald die Bedienperson P den Zapfhahn 4 in eine nicht näher dargestellte Tanköffnung des Kraftfahrzeugs K steckt, wird ein erster Verfahrensschritt V1 ausgelöst. Die Auslösung des Verfahrensschrittes V1 kann beispielsweise dadurch erfolgen, dass durch einen Näherungssensor (nicht dargestellt) ein Signal an die Auswerte- und Steuereinrichtung 11 übermittelt wird, dass ein Tankvorgang beabsichtigt ist. Das Signal kann vorzugsweise als Zustandsbit (ja/nein) oder Schaltimpuls bereitgestellt werden. Es ist auch denkbar, dass das Signal durch die Bedienperson P bei Betätigung einer Bedientaste generiert wird.
Im Verfahrensschritt V1 wird alsdann ein Energievorrat V(t) ermittelt oder ein zuvor ermittelter Energievorrat V(t) übergeben und eingelesen. Der Energievorrat V(t) stellt den Energievorrat des Energiespeichers 1, also z.B. den Tankinhalt des Kraftfahrzeugs K vor einer Abgabe von Kraftstoff an das Kraftfahrzeug K dar.
Diese Daten werden an die Auswerte- und Steuereinrichtung 12 gesendet, die daraufhin in einem nächsten Verfahrensschritt V2 aus einem ihr bekannten Volumen VES des Energiespeichers 1 und dem eingelesenen, aktuellen Energievorrat V(t) eine maximal aufnehmbare Energiemenge Vauf für den Energiespeicher 1 berechnet.

Die maximal aufnehmbare Energiemenge Vauf wird über die Kommunikationseinrichtung 5 an die Kommunikationseinrichtung 2 übermittelt.

Als optional (gestrichelt) sind Verfahrensschritte V3, V4, V52, V63 und V64 dargestellt. Daher wird zunächst auf einen Verfahrensschritt V51 eingegangen:
In diesem Verfahrensschritt V51 wird durch die Auswerte- und Steuereinrichtung 11 bzw. durch den Zentralrechner 8 die maximal aufnehmbare Energiemenge Vauf mit einem Energievorrat VEVE der Energieversorgungseinheit E beziehungsweise des Energiespeichers 9 verglichen. Ist die maximal aufnehmbare Energiemenge Vauf größer als der Energievorrat VEVE des Energiespeichers 9 oder gleich dem Energievorrat VEVE, so wird an die Kommunikationseinrichtung 2 der Energieversorgungseinheit E über das Kommunikationssystem KS eine entsprechende Information gesendet. Dies führt dazu, dass die Auswerte- und Steuereinrichtung 11 eine abzugebende Energiemenge Vab auf einen solchen Wert setzt, der dem Energievorrat VEVE der Energieversorgungseinheit E entspricht (siehe Verfahrensschritt V61).

Andernfalls, falls also die maximal aufnehmbare Energiemenge Vauf kleiner als der Energievorrat VEVE der Energieversorgungseinheit E ist, wird der Wert der abzugebenden Energiemenge Vab auf den Wert der aufnehmbaren Energiemenge Vauf gesetzt (vergleiche Verfahrensschritt V62).

In einem nächsten Verfahrensschritt V7 wird von der Kommunikationseinrichtung 2 ein Signal S über einen erfolgenden Energieversorgungsvorgang beziehungsweise Tankvorgang an die Kommunikationseinrichtung 5 übermittelt und der Energieversorgungsvorgang durch Abgabe der abzugebenden Energiemenge Vab eingeleitet. Das Signal S kann kurz vor oder mit Beginn des eigentlichen Energieversorgungsvorgangs übermittelt werden, beispielsweise dann, wenn ein Volumenstromsensor der Energieversorgungseinheit E auslöst.

Der Energieversorgungsvorgang wird automatisch beendet, sobald die abzugebende Energiemenge Vab an das Kraftfahrzeug K abgegeben wurde.

Als optionaler Verfahrensschritt V3 kann der Kommunikationseinrichtung 2 beziehungsweise dem Zentralrechner 8 ein Geldbetrag G übermittelt werden, der der Bedienperson P für den Energieversorgungsvorgang zur Verfügung steht oder den die Bedienperson P bereit ist auszugeben.

Dieser Geldbetrag G kann beispielsweise durch die Bedienperson P über eine Anwendung (App) des mobilen Kommunikationsgerätes 7 zur Verfügung gestellt werden. Eine Eingabe über ein Bedien-/ Tastenfeld an der Energieversorgungseinheit E (nicht dargestellt) ist auch möglich.

Ausgehend vom Geldbetrag G wird im Verfahrensschritt V3 durch die Auswerte- und Steuereinrichtung 11 beziehungsweise den Zentralrechner 8 über den Preis pro Energieeinheit eine bezahlbare Energiemenge Vbez errechnet.

In einem darauffolgenden, ebenfalls optionalen Verfahrensschritt V4 wird die aufnehmbare Energiemenge Vauf mit der bezahlbaren Energiemenge Vbez verglichen.

Ist die aufnehmbare Energiemenge Vauf größer als die bezahlbere Energiemenge Vbez oder gleich der bezahlbaren Energiemenge Vbez, so folgt in einem Verfahrensschritt V52 ein Vergleich der bezahlbaren Energiemenge Vbez mit dem Energievorrat VEVE der Energieversorgungseinheit E beziehungsweise des Energiespeichers 9. Falls die aufnehmbare Energiemenge Vauf kleiner ist als die bezahlbare Energiemenge Vbez, folgt der bereits beschriebene Verfahrensschritt V51.

Wird im Verfahrensschritt V52 ermittelt, dass die bezahlbare Energiemenge Vbez größer ist als der Energievorrat VEVE der Energieversorgungseinheit E oder gleich dem Energievorrat VEVE ist, so wird durch die Auswerte- und Steuereinrichtung 11 die abzugebende Energiemenge Vab mit dem Wert des Energievorrats VEVE gleichgesetzt (vgl. Verfahrensschritt V64). Gegebenenfalls kann hier eine Warnmeldung ausgegeben werden, falls der Energievorrat VEVE einen bestimmten Wert unterschreiten sollte. Es ist auch die Option eines Abbruchs des Energieversorgungsvorgangs denkbar.

Falls die bezahlbare Energiemenge Vbez kleiner als der Energievorrat VEVE ist, wird die abzugebende Energiemenge Vab durch die Auswerte- und Steuereinrichtung 11 auf den Wert der bezahlbaren Energiemenge Vbez gesetzt (vgl. Verfahrensschritt V63).

Daran anschließend erfolgt der bereits beschriebene Verfahrensschritt V7.

Mit dem dargestellten Verfahren ist eine Automatisierung eines Energieversorgungsvorgangs und damit eine Komfortsteigerung möglich. Die Bedienperson P braucht sich über die zu tankende Kraftstoffmenge keine Gedanken machen. Diese wird aus den systemseitig erfassten Daten abgeleitet.

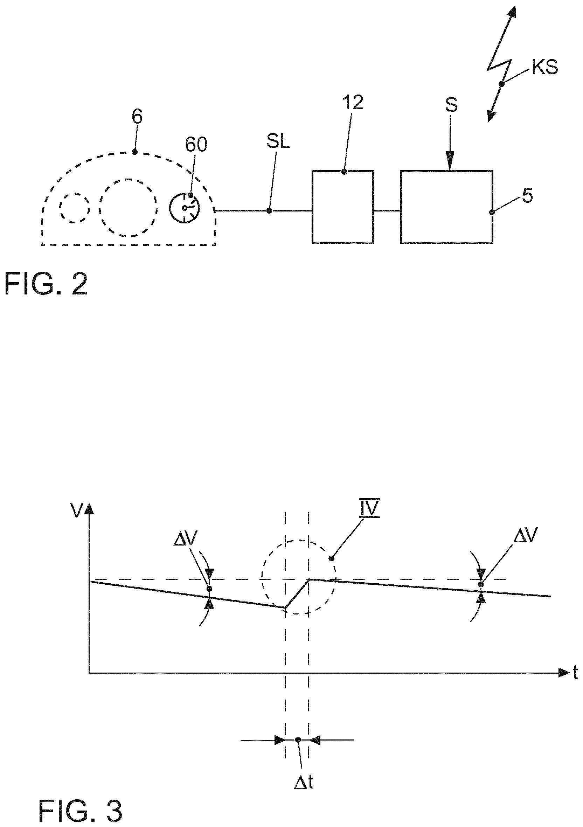

Anhand von Fig. 2 ist nun dargestellt, wie im Verfahrensschritt V7 der Kommunikationseinrichtung 5 über das Kommunikationssystem KS das Signal S zur Verfügung gestellt wird. Das Signal S steht somit auch der Auswerte- und Steuereinrichtung 12 zur Verfügung, welche in Abhängigkeit des Signals S über eine Steuerleitung SL die bereits erwähnte Anzeigeeinrichtung 60 des Anzeigeinstrumentes 6 ansteuern kann.

In Fig. 3 ist ein Energievorrat V im Energiespeicher 1 des Kraftfahrzeugs K über der Zeit t aufgetragen. Es ist ersichtlich, dass mit dem Betrieb des Kraftfahrzeugs K Energie verbraucht wird und es zu einer Veränderung ΔV des Energievorrats V kommt.

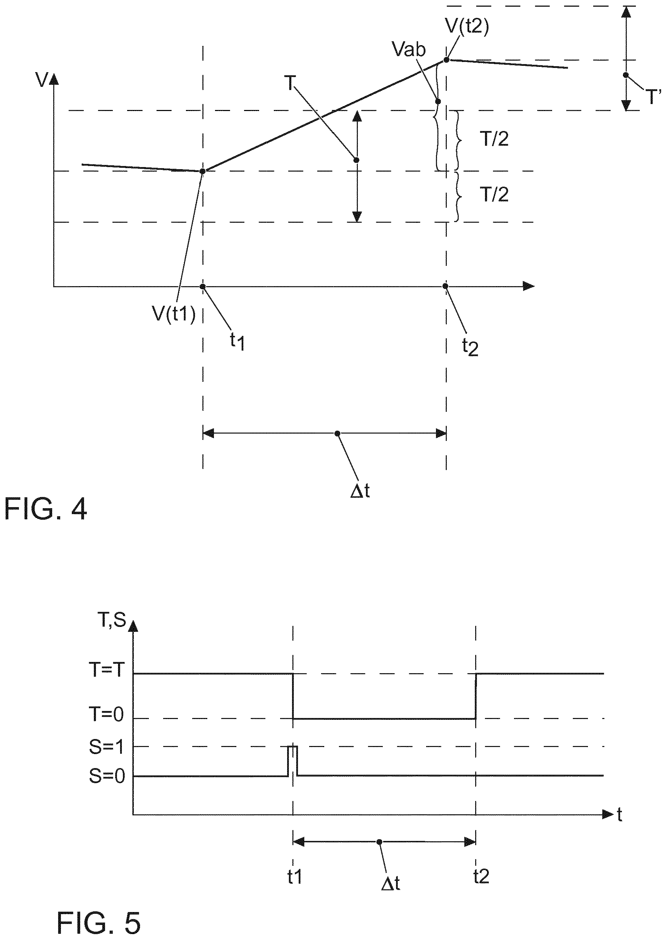

Mit der Detailangabe IV, welche sich in Fig. 4 widerspiegelt, wird ein Energieversorgungsvorgang (Tankvorgang) genauer dargestellt.

Der Energieversorgungsvorgang dauert eine Zeitdauer Δt, welche durch einen Beginn des Energieversorgungsvorgangs zu einem Zeitpunkt t1 und durch dessen Ende zu einem Zeitpunkt t2 definiert ist.

Mit V(t1) ist ein Energievorrat zum Zeitpunkt t1 und mit V(t2) ein Energievorrat des Energiespeichers 1 zum Zeitpunkt t2, also nach Beendigung des Tankvorgangs beziffert.

In Fig. 4 ist zudem, ausgehend vom Niveau des Energievorrats V(t1), ein Toleranzbereich T (sogenannte Nachtankschwelle) eingezeichnet, innerhalb dessen eine von der Füllstandserfassungseinrichtung 10 gemessene Veränderung ΔV des Energievorrats V (hier konkret eine gemessene Änderung des Füllstands des Energiespeichers 1) durch die Anzeigeeinrichtung 60 nicht angezeigt wird.

Hierdurch soll im Stillstand des Kraftfahrzeugs ein übermäßiges Schwanken in der Anzeige der Anzeigeeinrichtung 60 vermieden werden, welches beispielsweise bei Schräglage des Kraftfahrzeugs K, bei Be- und Entladevorgängen oder beim Ein- und Aussteigen von Personen hervorgerufen werden kann.

Ein solcher Toleranzbereich T führt jedoch dazu, dass die bei einem Tankvorgang von der Energieversorgungseinheit E an das Kraftfahrzeug insgesamt abgegebene Energiemenge Vab, d. h. zum Beispiel die abgegebene Literzahl an Kraftstoff, dann fehlerhaft angezeigt wird, wenn die abgegebene Energiemenge Vab kleiner oder gleich T/2 ist. Ist die abgegebene Energiemenge Vab größer als T/2 (wie in Fig. 4 dargestellt), tritt kein Anzeigefehler auf, da in einem solchen Fall die Nachtankschwelle überschritten ist und die tatsächlich abgegebene Energiemenge Vab angezeigt wird. Der Toleranzbereich T wirkt entsprechend auch für Abtankvorgänge, bei denen also Kraftstoff aus dem Kraftstoffbehälter entnommen wird. Allerdings ist dieser Fall wesentlich seltener.

Abhilfe wird hier durch ein spezielles Ansteuerungsverfahren geschaffen, welches anhand von Fig. 5 erläutert werden soll.

In dieser Figur ist auf der Hochachse der Zustand des Toleranzbereichs T dargestellt, welcher steuerungstechnisch entweder in seiner festgelegten Größe bestehen (T = T) oder welcher entfernt werden kann (T = 0).

Des Weiteren ist das Signal S dargestellt, welches an die Kommunikationseinrichtung 5 gesendet werden kann (S = 1) oder welches nicht gesendet wird (S = 0).

Es ist also ersichtlich, dass mit Beginn des Betankungsvorgangs zum Zeitpunkt t1 der Kommunikationseinrichtung 5 das Signal S gesendet wird (S = 1). Damit wird in der Auswerte- und Steuereinrichtung 12 steuerungslogisch auch der Toleranzbereich T entfernt (T = 0).

Während die Sendung des Signal S nur für kurze Zeit impulsartig im Zeitpunkt t1 erfolgt, wird der Toleranzbereich T für die gesamte Zeitdauer Δt des Tankvorgangs entfernt (T = 0).

An der Figur ist ferner ersichtlich, dass der einmal vorgegebene Toleranzbereich T am Ende des Betankungsvorgangs zum Zeitpunkt t2 automatisch wieder aktiviert wird (T = T). Dies allerdings dann auf dem höheren Niveau des Energievorrats V(t2) (vgl. auch T' in Fig. 4).

Abweichend vom Ausführungsbeispiel ist auch denkbar, dass mit Übermittlung des Signal S der Toleranzbereich T für die Dauer Δt des Energieversorgungsvorgangs nicht vollständig entfernt sondern lediglich verringert wird.

Ferner ist, abweichend von der Darstellung in Fig. 5 auch denkbar, dass nach Beendigung eines Tankvorgangs zum Zeitpunkt t2 abermals ein impulsartiges Signal an die Kommunikationseinrichtung 5 gesendet wird, welches auf das Ende des Tankvorgangs hinweist. Eine erneute Aktivierung des Toleranzbereichs T (T = T) erfolgt vorzugsweise erst dann, wenn an der Auswerte- und Steuereinrichtung 12 sowohl das erwähnte Signal als auch ein weiteres Signal anliegen, durch welches eine vorliegende Geschwindigkeit des betankten Kraftfahrzeugs größer Null bestätigt wird.

Durch die veränderte Ansteuerung der Anzeigeeinrichtung 60 zumindest während der Zeitdauer Δt des Betankungsvorgangs wird der gesamte Wert der abgegebenen Energiemenge Vab und damit ein korrekter Wert für eine aufgenommene Energiemenge des Kraftfahrzeugs K angezeigt.

Die Erfindung ist nicht auf das beschriebene Ausführungsbeispiel beschränkt. Dieses wurde nur zur allgemeinen Erläuterung des Kerngedankens der Erfindung herangezogen. Die Erfindung kann im Rahmen ihres Schutzumfangs vielmehr auch andere Ausprägungen als das zuvor beschriebene Ausführungsbeispiel annehmen. Hierbei kann sie insbesondere auch solche Merkmale aufweisen, die eine Kombination aus Einzelmerkmalen der jeweiligen Ansprüche darstellen.

### BEZUGSZEICHENLISTE

- 1: Energiespeicher des Kraftfahrzeugs
- 2: Kommunikationseinrichtung
- 3: Zapfschlauch
- 4: Zapfhahn
- 5: Kommunikationseinrichtung
- 6: Anzeigeinstrument
- 7: Mobiles Kommunikationsgerät
- 8: Zentralrechner
- 9: Energiespeicher der Energieversorgungseinheit
- 10: Füllstandserfassungseinrichtung
- 11: Auswerte- und Steuereinrichtung
- 12: Auswerte- und Steuereinrichtung
- 60: Anzeigeeinrichtung
- 90: Füllstandserfassungseinrichtungen

- E: Energieversorgungseinheit (Zapfsäule)
- G: zur Verfügung stehender Geldbetrag
- K: Kraftfahrzeug
- KS: drahtloses Kommunikationssystem
- P: Bedienperson
- S: Signal
- SL: Steuerleitung
- t: Zeit
- t1: Zeitpunkt des Beginns vom Energieversorgungsvorgang
- t2: Zeitpunkt des Endes vom Energieversorgungsvorgang
- Δt: Zeitdauer des Energieversorgungsvorgangs
- T, T': Toleranzbereich
- TS: Tankstelle
- V: Energievorrat im Energiespeicher des Kraftfahrzeugs
- V(t): Energievorrat zum Zeitpunkt t
- V (t1): Energievorrat zum Zeitpunkt t1
- V (t2): Energievorrat zum Zeitpunkt t2
- ΔV: Veränderung des Energievorrats
- ΔV1: Veränderung des Energievorrats innerhalb des Toleranzbereichs
- ΔV2: Veränderung des Energievorrats außerhalb des Toleranzbereichs
- V1-V4: Verfahrensschritte
- V51, V52: Verfahrensschritte
- V61-V64: Verfahrensschritte
- V7: Verfahrensschritt
- Vab: abzugebende beziehungsweise abgegebene Energiemenge
- Vauf: aufnehmbare Energiemenge
- Vbez: bezahlbare Energiemenge
- VES: Volumen des Energiespeichers vom Kraftfahrzeug
- VEVE: Energievorrat der Energieversorgungseinheit

## Patentansprüche

1. Verfahren zur direkten oder indirekten Kommunikation zwischen einem Kraftfahrzeug (K) und wenigstens einer fahrzeugexternen Energieversorgungseinheit (E) für das Kraftfahrzeug (K) in Zusammenhang mit einem Energieversorgungsvorgang, **dadurch gekennzeichnet, dass** vor oder mit Beginn einer Energieabgabe an wenigstens einen Energiespeicher (1) des Kraftfahrzeugs (K) von der Energieversorgungseinheit (E) an wenigstens eine Komponente (5) des Kraftfahrzeugs (K) ein Signal (S) zur Bestätigung der erfolgenden Energieabgabe übermittelt wird, welches als Statussignal in Form eines Zustandsbits ausgebildet ist, wobei nach Übermittlung des Signals (S) fahrzeugseitig eine Anzeige der aufgenommenen Energiemenge derart angepasst wird, dass ein ohne Vorliegen des Signals (S) vorhandener Toleranzbereich (T), innerhalb dessen Schwankungen (ΔV) des Energievorrats (V(t)) im Energiespeicher (1) nicht angezeigt werden, beseitigt oder zumindest verkleinert wird.

2. Verfahren nach Anspruch 1, **dadurch gekennzeichnet, dass** vor einer Energieabgabe an den wenigstens einen Energiespeicher (1) des Kraftfahrzeugs (K) fahrzeugseitig ein Energievorrat (V(t)) im Energiespeicher (1) ermittelt, daraus fahrzeugseitig ein Wert für eine maximal vom Energiespeicher (1) aufnehmbare Energiemenge (Vauf) abgeleitet und dieser Wert fahrzeugseitig der fahrzeugexternen Energieversorgungseinheit (E) zur Verfügung gestellt wird, wobei eine Abgabemenge (Vab) von Energie höchstens der maximal aufnehmbaren Energiemenge (Vauf) entspricht.

3. Verfahren nach Anspruch 2, **dadurch gekennzeichnet, dass** vor einer Energieabgabe die maximal aufnehmbare Energiemenge (Vauf) mit einem bestimmten oder zu bestimmenden Geldbetrag (G) abgeglichen wird, derart, dass der Energieversorgungseinheit (E) eine Information über den Geldbetrag (G) zur Verfügung gestellt wird und aus diesem Geldbetrag eine bezahlbare Abgabemenge (Vbez) abgeleitet wird, wobei die Energieversorgungseinheit (E) derart angesteuert wird, dass die tatsächliche Abgabemenge (Vab) kleiner ist als die maximal aufnehmbare Energiemenge (Vauf), wenn die bezahlbare Abgabemenge (Vbez) kleiner als die maximal aufnehmbare Energiemenge (Vauf) ist.

4. Verfahren nach Anspruch 2 oder 3, **dadurch gekennzeichnet, dass** vor einer Energieabgabe die maximal aufnehmbare Energiemenge (Vauf) mit einem Energievorrat (VEVE) der Energieversorgungseinheit (E) abgeglichen wird, wobei die Energieversorgungseinheit (E) derart angesteuert wird, dass die tatsächliche Abgabemenge (Vab) dem Energievorrat (VEVE) der Energieversorgungseinheit (E) entspricht, wenn der Energievorrat (VEVE) der Energieversorgungseinheit (E) kleiner als die maximal aufnehmbare Energiemenge (Vauf) ist.

5. Vorrichtung zur Durchführung des Verfahrens nach einem der vorhergehenden Ansprüche, umfassend ein Kraftfahrzeug (K) und eine fahrzeugexterne Energieversorgungseinheit (E), wobei sowohl das Kraftfahrzeug (K) als auch die Energieversorgungseinheit (E) jeweils mit wenigstens einer Kommunikationseinrichtung (2 bzw. 5) ausgestattet sind, über die ein direkter oder indirekter Datenaustausch zwischen dem Kraftfahrzeug (K) und der Energieversorgungseinheit (E) möglich ist, wobei das Kraftfahrzeug (K) wenigstens eine Anzeigeeinrichtung (60) zur Anzeige eines Energievorrats (V(t)) in einem Energiespeicher (1) aufweist, wobei die Anzeigeeinrichtung (60) derart ausgebildet ist, dass innerhalb eines Toleranzbereichs (T) liegende Schwankungen des Energievorrats (V(t)) im Energiespeicher (1) nicht angezeigt werden, **dadurch gekennzeichnet, dass** die Energieversorgungseinheit (E) ausgebildet ist kurz vor oder mit Beginn eines Energieversorgungsvorgangs der Kommunikationseinrichtung (5) des Kraftfahrzeugs (K) von der Kommunikationseinrichtung (2) der Energieversorgungseinheit (E) ein Signal (S) über einen erfolgenden Energieversorgungsvorgang in Form eines Zustandsbits zu übermitteln und die Anzeigeeinrichtung (60) aufgrund der Übermittlung eines solchen Signals (S) derart ausgebildet ist, dass die Größe des Toleranzbereichs (T) in Abhängigkeit des Signals (S) entfernt oder zumindest verkleinert wird.

6. Vorrichtung nach Anspruch 5, **dadurch gekennzeichnet, dass** eine Abgabemenge (Vab) von Energie durch die Energieversorgungseinheit (E) an das Kraftfahrzeug (K) in Abhängigkeit von ausgetauschten Daten (Vauf, Vbez, VEVE) steuerbar ist.

## Claims

1. Method for direct or indirect communication between a motor vehicle (K) and at least one vehicle-external energy supply unit (E) for the motor vehicle (K) in conjunction with an energy supply process, **characterized in that**, before or at the start of an energy output to at least one energy store (1) of the motor vehicle (K), a signal (S) for confirming the energy output which has taken place and which is embodied as a status signal in the form of a status bit, is transmitted from the energy supply unit (E) to at least one component (5) of the motor vehicle (K), wherein after the transmission of the signal (S) a display of the quantity of energy which has been absorbed is adapted on the vehicle side, in such a way that a tolerance range (T) which is present without the signal (S) being present and within which fluctuations (ΔV) of the energy supply (V(t)) are not displayed in the energy store (1), is eliminated or at least reduced in size.

2. Method according to Claim 1, **characterized in that** before an energy output to the at least one energy store (1) of the motor vehicle (K) is determined, an energy supply (V(t)) on the vehicle side is determined in the energy store (1) and a value for a maximum quantity of energy (Vauf) which can be absorbed by the energy store (1) is derived, and this value is made available on the vehicle side to the vehicle-external energy supply unit (E), wherein an output quantity (Vab) of energy corresponds at maximum to the maximum quantity of energy (Vauf) which can be absorbed.

3. Method according to Claim 2, **characterized in that** before an energy output the maximum quantity of energy (Vauf) which can be absorbed is compared with an amount of money (G) which has been determined or is to be determined, such that information about the amount of money (G) is made available to the energy supply unit (E), and an output quantity (Vbez) which can be paid is derived from this amount of money, wherein the energy supply unit (E) is actuated in such a way that the actual output quantity (Vab) is smaller than the maximum quantity of energy (Vauf) which can be absorbed when the output quantity (Vbez) which can be paid is smaller than the maximum quantity of energy (Vauf) which can be absorbed.

4. Method according to Claim 2 or 3, **characterized in that** before an energy output the maximum quantity of energy (Vauf) which can be absorbed is compared with an energy reserve (VEVE) of the energy supply unit (E), wherein the energy supply unit (E) is actuated in such a way that the actual output quantity (Vab) corresponds to the energy reserve (VEVE) of the energy supply unit (E) if the energy reserve (VEVE) of the energy supply unit (E) is smaller than the maximum quantity of energy (Vauf) which can be absorbed.

5. Device for carrying out the method according to one of the preceding claims, comprising a motor vehicle (K) and a vehicle-external energy supply unit (E), wherein both the motor vehicle (K) and the energy supply unit (E) are each equipped with at least one communication device (2 and 5, respectively) via which a direct or indirect data exchange between the motor vehicle (K) and the energy supply unit (E), is possible, wherein the motor vehicle (K) has at least one display device (60) for displaying an energy reserve (V(t)) in an energy store (1), wherein the display device (60) is designed in such a way that fluctuations of the energy reserve (V(t)) within a tolerance band (T) are not displayed in the energy store (1), **characterized in that** the energy supply unit (E) is designed to transfer, just before or at the start of an energy supply process of the communication device (5) of the motor vehicle (K), a signal (S) about an energy supply process which has taken place, in the form of a status bit, from the communication device (2) of the energy supply unit (E), and the display device (60) is designed in such a way that, owing to the transfer of such a signal (S), the size of the tolerance band (T) is removed or at least reduced in size as a function of the signal (S).

6. Device according to Claim 5, **characterized in that** an output quantity (Vab) of energy by the energy supply unit (E) to the motor vehicle (K) can be controlled as a function of exchanged data (Vauf, Vbez, VEVE).

## Revendications

1. Procédé de communication directe ou indirecte entre un véhicule automobile (K) et au moins une unité d'alimentation en énergie (E) extérieure au véhicule et destinée au véhicule automobile (K) en relation avec un processus d'alimentation en énergie, **caractérisé en ce que**, avant ou dès la délivrance d'énergie à au moins un accumulateur d'énergie (1) du véhicule automobile (K), un signal (S) de confirmation de la délivrance d'énergie en cours est transmis de l'unité d'alimentation en énergie (E) à au moins un composant (5) du véhicule automobile (K) et se présente comme un signal d'état sous la forme d'un bit d'état, après la transmission du signal (S), un affichage de la quantité d'énergie consommée étant adapté côté véhicule de façon à supprimer ou au moins réduire une plage de tolérance (T) qui est présente sans présence du signal (S) et dans laquelle des fluctuations (ΔV) de la réserve d'énergie (V(t)) dans l'accumulateur d'énergie (1) ne sont pas affichées.

2. Procédé selon la revendication 1, **caractérisé en ce que**, avant la délivrance d'énergie à l'au moins un accumulateur d'énergie (1) du véhicule automobile (K), une réserve en énergie (V(t)) dans l'accumulateur d'énergie (1) est déterminée côté véhicule, une valeur en est déduite côté véhicule pour une quantité d'énergie maximale absorbable (Vabs) par l'accumulateur d'énergie (1) et cette valeur est mise à disposition, côté véhicule, de l'unité d'alimentation en énergie (E) extérieure au véhicule, une quantité d'énergie délivrée (Vdél) correspondant au plus à la quantité d'énergie maximale absorbable (Vabs).

3. Procédé selon la revendication 2, **caractérisé en ce que**, avant la délivrance d'énergie, la quantité maximale d'énergie absorbable (Vabs) est comparée à une somme d'argent (G) déterminée ou à déterminer de manière à ce que l'unité d'alimentation en énergie (E) dispose d'une information sur la somme d'argent (G) et déduise de cette somme d'argent la quantité à délivrer payable (Vpay), l'unité d'alimentation en énergie (E) étant commandée de manière à ce que la quantité à délivrer réelle (Vdél) soit inférieure à la quantité d'énergie maximale absorbable (Vabs) lorsque la quantité à délivrer payable (Vpay) est inférieure à la quantité d'énergie maximale absorbable (Vabs).

4. Procédé selon la revendication 2 ou 3, **caractérisé en ce que** la quantité maximale d'énergie absorbable (Vabs) est comparée à une réserve d'énergie (VEVE) de l'unité d'alimentation en énergie (E) avant la délivrance d'énergie, l'unité d'alimentation en énergie (E) étant commandée de telle sorte que la quantité à délivrer réelle (Vdél) corresponde à la réserve d'énergie (VEVE) de l'unité d'alimentation en énergie (E) lorsque la réserve d'énergie (VEVE) de l'unité d'alimentation en énergie (E) est inférieure à la quantité d'énergie maximale absorbable (Vabs).

5. Dispositif destiné à mettre en œuvre le procédé selon l'une des revendications précédentes, le dispositif comprenant un véhicule automobile (K) et une unité d'alimentation en énergie (E) extérieure au véhicule, le véhicule automobile (K) et l'unité d'alimentation en énergie (E) étant chacun équipés d'au moins un moyen de communication (2 ou 5) permettant un échange de données direct ou indirect entre le véhicule automobile (K) et l'unité d'alimentation en énergie (E), le véhicule automobile (K) comportant au moins un moyen d'affichage (60) destiné à afficher une réserve d'énergie (V(t)) dans un accumulateur d'énergie (1), le moyen d'affichage (60) étant conçu de telle sorte que des fluctuations de la réserve d'énergie (V(t)) dans l'accumulateur d'énergie (1), lesquelles sont dans une plage de tolérance (T), ne sont pas affichées, **caractérisé en ce que** l'unité d'alimentation en énergie (E) est conçue pour transmettre, à l'aide du moyen de communication (2) de l'unité d'alimentation en énergie (E), un signal (S) concernant un processus d'alimentation en énergie en cours sous la forme d'un bit d'état peu avant ou dès un processus d'alimentation en énergie du moyen de communication (5) du véhicule automobile (K) et, sur la base de la transmission d'un tel signal (S), le moyen d'affichage (60) est conçu de façon à supprimer ou au moins réduire la dimension de la plage de tolérance (T) en fonction du signal (S).

6. Dispositif selon la revendication 5, **caractérisé en ce qu'**une quantité d'énergie à délivrer (Vdél) par l'unité d'alimentation en énergie (E) au véhicule automobile (K) peut être commandée en fonction de données échangées (Vabs, Vpay, VEVE).
